# EUROPEAN PATENT APPLICATION

(11) **EP 1 223 080 A1**
(43) Date of publication of application: **17.07.2002**
(21) Application number: 01100706.9
(22) Date of filing: 12.01.2001
(51) Int. Cl.: B60R 1/02

(54) **Automotive vehicle provided with a controllable rear view mirror system**

(71) Applicant: Siemens Aktiengesellschaft, 80333 München (DE)
(72) Inventor: Troedel, Bernhard, 65550 Limburg (DE)

(57) **Abstract**

An automotive vehicle is provided with a controllable rear view mirror system (26) arranged with an operational position and a non-operational state, and means for reversibly changing-over the rear view mirror system (26) between the operational position and the non-operational state, respectively. In the operational position a vehicle driver (20) will be allowed to see inside an appropriate first viewing angle away from a direction driving. In particular, the first viewing angle is substantially counter to the direction of driving. In the non-operational state the controllable rear-view mirror system (26) will allow a vehicle driver (20) to have an improved view in an appropriate second viewing angle (28) along an anticipated direction of driving as controlled by an actual vehicle condition (34).

## Description

The invention relates to an automotive vehicle provided with a controllable rear view mirror system arranged with an operational position and a non-operational state, and means for reversibly changing-over said rear view mirror system between said operational position and said non-operational state, respectively, so that in said operational position a vehicle driver will be allowed to see inside an appropriate first viewing angle away from a direction driving. Present-day traffic density and traffic dynamics have increased to such an extent that a vehicle driver will need information about traffic conditions in various different directions as seen from the vehicle in question. For facilitating thereof, several categories of rear-view mirrors have been proposed, but the size, position, and possibly the curvature of the mirror surface, and also the structural framing of the mirror proper have generally been subject to a trade-off: the better the mirror function will be in the envisaged viewing direction, such as rearward, the worse will often be the obscuring effect in the other direction, notably forward.

The present inventor has recognized that such obscuring effect will have a relatively large nuisance value during appreciable changes in the actual driving direction. This problem is caused in the first place in that other vehicles could come from directions that in normal traffic conditions would generally be unfeasible; also, vehicle-unrelated obstacles and the like could lie in such relatively uncommon directions. A second aspect of the problem is that the information reflected by the mirror will often have less relevance during such appreciable changes, such as that the probability to be overtaken during a sharp curve will generally be strongly diminished.

In consequence, amongst other things, it is an object of the present invention to surrender an appreciable part of the mirror function during such sharp curves, whilst at the same time improving the resulting field of view.

Now therefore, according to one of its aspects the invention is characterized in that said first viewing angle is substantially counter to the direction of driving, and in that in said non-operational state said controllable rear-view mirror system will allow a vehicle driver to have an improved view in an appropriate second viewing angle along an anticipated direction of driving as controlled by an actual vehicle condition.

Generally, the controlling of the switching-over by the actual vehicle condition will make the operation fail-safe against control errors caused by the driver person.

By itself, US-A-5,337,190 discloses a mirror system located whithin a rear spoiler device that is mounted rearwards from the vehicle body, and which mirror system has its operational position controlled by the vehicle moving either forward or rearward. In contradistinction to the present invention, this facility will offer a ***parking*** assistance rather than a ***driving*** assistance. Therefore, the standard position of the mirror will be the non-operational position. In the present invention, the non-operational state will usually be an exception. Furthermore, the mirror of the prior art looks downward, rather than rearward, as seen from the driver. Also, the providing of the non-operational state is done for aesthetic and/or streamlining purposes. Finally, in its active position, the prior art mirror will not obscure any relevant other traffic.

A preferred embodiment of an automotive vehicle according to the invention is characterized in that said actual vehicle condition is governed by the steering wheel/front wheel system.

By applying this measure the changing-over of the rear view mirror system between said operational position and said non-operational state can be accurately synchronized with the actual vehicle condition, therewith obtaining a reliable and secure control of said rear view mirror system.

Preferably, said actual vehicle condition is a front wheel steering angle.

Another preferred embodiment of the invention is characterized in that said non-operational state is a retracted or rotated position of said rear-view mirror with respect to said operational position. This measure allows to substantially decrease the unwanted obscurity by the rear-view mirror proper as a physical object in the non-operational state, therewith further improving the vehicle driver's view in the direction of said second viewing angle.

An alternative measure to minimize the unwanted coverage of the second viewing angle by the rear-view mirror proper is characterized in that said non-operational state has at least partial transparency of said rear view mirror. This measure prevents the need for a movable and/or rotational construction of the rear-view mirror allowing for a costeffective and mechanically robust implementation of the invention.

The invention also relates to a controllable rear view mirror system arranged for mounting in a motor vehicle as referred to in the preamble of Claim 1.

These and further aspects and advantages of the invention will be discussed more in detail hereinafter with reference to the disclosure of preferred embodiments, and in particular with reference to the appended Figures that show:
- Figure 1,: an overall view of the relevant vehicle configuration;
- Figure 2,: the subsystem cooperation as relevant to the present invention;
- Figure 3,: a flow chart of the various interactions relevant to the present invention.

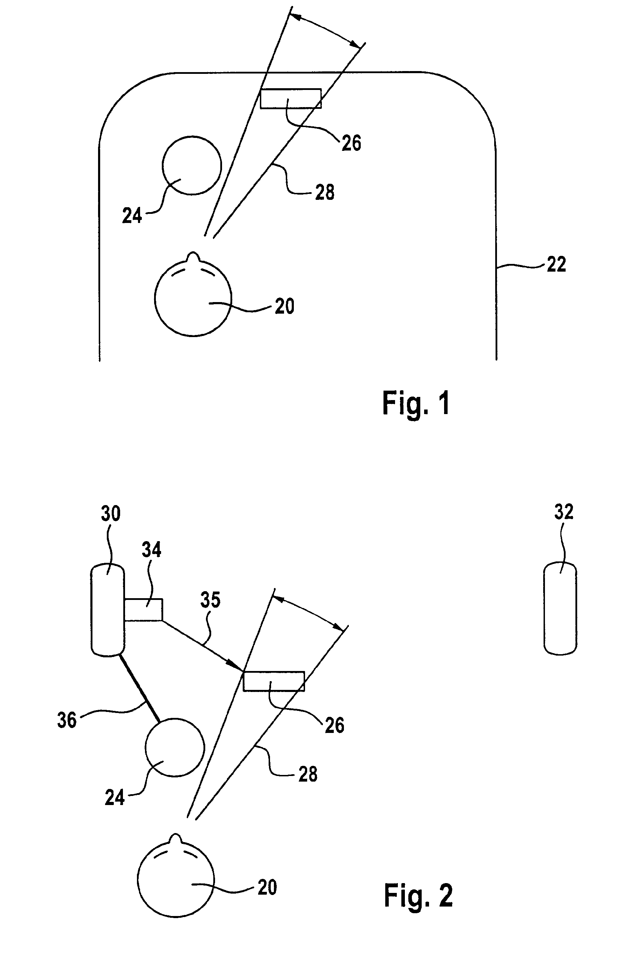

Figure 1 illustrates an overall view of the relevant vehicle configuration, as seen from above. Inside the vehicle body 22 the driver sits in continental European fashion left front. The driver's head 20 has been indicated, as well as the steering wheel 24. Furthermore, the Figure shows the rear-view mirror 26 and the viewing angle 28 that is obscured by the rear-view mirror as viewed from the position of the driver's head. Generally, the rear-view mirror 26 is intended to allow the driver to look in a direction away from the actual direction of driving, such as rearward. Also as shown, the obscuring by the mirror is broadly along the direction of actual driving. Of course, this obscuring angle is a solid angle that furthermore has a vertical dimension as well. Generally, the motor vehicle may have other rear-view mirrors, such as those that are mounted outside the vehicle body at left and/or at right. In principle, such other mirrors could be provided for looking in specific directions, all of these however bringing about their own specific obscuring effects. In consequence, the teachings of the present invention would be just as relevant for these other situations that could bring about all or part of the advantages of the present invention and sometimes, additional advantages as well.

Figure 2 illustrates the subsystem cooperation as relevant to the present invention. Like elements of the configuration as in Figure 1 carry identical reference numerals. Furthermore, this Figure 2 shows front wheels 30 at left and 32 at right, that effect the steering proper of the vehicle. The left wheel 30 has been provided with an angle sensor 34 that measures the steering angle of this wheel. Through logical interconnection 35 the steering angle will control the non-operational state of the rear-view mirror 26. If the steering angle exceeds a particular first threshold, the non-operational state will begin. Below a further second threshold, the operational position will prevail again. Often, the two thresholds will constitute a hysteresis phenomenon. This stabilizes the control of the rear-view mirror 26 in order to avoid unwanted oscillation between the operational position and the non-operational state from occurring. To further improve the stability in the control of the rear-view mirror 26 and at the same time somewhat extend the period of the non-operational state, the return to the operational position may be subject to a delay, such as by one or a few seconds.

The arrangement can be amended in various ways. First, the wheel angle sensor 34 may be connected to the other front wheel 32, or even to any wheel that has its steering angle influenced, as the case may be, one of the left and right back wheels (not shown). Now furthermore, a connection 36 symbolizes the interconnection between the steering wheel's position, and the associated position of the wheels 30, 32. This means that the angle sensing could be executed from the steering wheel 24, rather than from the driving wheel 30. The transition from the operational position to the non-operational state can be effected in various ways.

A first procedure corresponds to the one as disclosed in the above reference US-A-5,337,190: it is effected by mechanically retracting to a non-operational position, under control of an appropriate mechanical control mechanism. It has been common to control rear view mirrors by mechanical means, such as by rotating handles that are disposed inside the car's body.

A second procedure is to provide the rear-view mirror 26 with an LCD layer that will be rendered transparent in an electronic manner. Combinations of the above, and partial control would be feasible as well, such as by rendering one half section of the mirror transparent, whilst leaving the remaining part of the mirror uninfluenced.

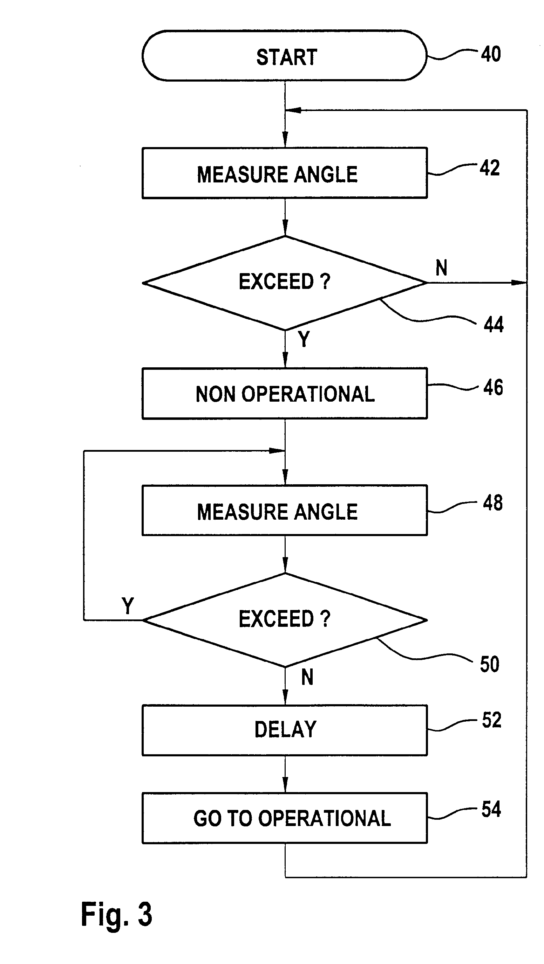

Figure 3 illustrates a flow chart of the various interactions relevant to the present invention. In block 40, the operation starts, such as by turning on of the vehicle, and all relevant control is rendered operational. In block 42, the steering angle is measured, such regarding the driving wheel. In block 44, the result is compared with a first threshold value, and as long as no excess is found (N), blocks 42, 44 will constitute a waiting loop. If the first threshold value is exceeded however, in block 46 the mirror in question is driven to its non-operational state. Then, in block 48 the steering angle is measured again, and the result is compared with a second threshold value in block 50. As long as an excess is found (Y), blocks 48, 50 will again constitute a waiting loop. As soon as the excess is found to terminate (N), block 52 implements a delay, and subsequently in block 54 the mirror in question is driven back to its operational position. For brevity, various aspects have been suppressed, such as the terminating of the flow procedure.

While the above described embodiments of the invention are the preferred ones, it is apparent to those skilled in the art that many other changes and modifications may be made, without departing from the invention in its broader aspects. Therefore the intentions of the claims is to cover such changes and modifications, falling within the true spirit and scope of the invention.

## Claims

1. An automotive vehicle provided with a controllable rear view mirror system (26) arranged with an operational position and a non-operational state, and means for reversibly changing-over said rear view mirror system (26) between said operational position and said non-operational state, respectively, so that in said operational position a vehicle driver (20) will be allowed to see inside an appropriate first viewing angle away from a direction driving, **characterized in that** said first viewing angle is substantially counter to the direction of driving, and **in that** in said non-operational state said controllable rear-view mirror system (26) will allow a vehicle driver (20) to have an improved view in an appropriate second viewing angle (28) along an anticipated direction of driving as controlled by an actual vehicle condition (34).

2. An automotive vehicle as claimed in Claim 1, **characterized in that** said actual vehicle condition is governed by the steering wheel/front wheel system (24, 30, 36).

3. An automotive vehicle as claimed in Claim 1, **characterized in that** said actual vehicle condition is a front wheel steering angle (34).

4. An automotive vehicle as claimed in Claim 1, **characterized in that** said rear view mirror (26) is arranged inside the vehicle's cabin (22).

5. An automotive vehicle as claimed in Claim 1, **characterized in that** said non-operational state is a retracted or rotated position of said rear-view mirror (26) with respect to said operational position.

6. An automotive vehicle as claimed in Claim 1, **characterized in that** said non-operational state has at least partial transparency of said rear view mirror (26).

7. A controllable rear view mirror system (26) arranged for mounting in an automotive vehicle as claimed in Claim 1 and having an operational position and a non-operational state, and means for reversibly changing-over said rear view mirror system (26) between said operational position and said non-operational state, respectively, for in said operational position allowing a vehicle driver (20) to see inside an appropriate first viewing angle away from a direction driving, **characterized in that** said first viewing angle is substantially counter to the direction of driving, and **in that** in said non-operational state said controllable rear-view mirror system (26) will allow a vehicle driver (20) to have an improved view in an appropriate second viewing angle (28) along an anticipated direction of driving as controlled by an actual vehicle condition (34).

8. A mirror system as claimed in Claim 7, **characterized in that** said actual vehicle condition is governed by the steering wheel/front wheel system (24, 30, 36).

9. A mirror system as claimed in Claim 7, **characterized in that** said actual vehicle condition is a front wheel steering angle (34).

10. A mirror system as claimed in Claim 7, **characterized in that** said non-operational state is a retracted or rotated position of said rear-view mirror (26) with respect to said operational position.

11. A mirror system as claimed in Claim 7, **characterized in that** said non-operational state has at least partial transparency of said rear view mirror (26).
